# EUROPEAN PATENT APPLICATION

(11) **EP 1 343 273 A2**
(43) Date of publication of application: **10.09.2003**
(21) Application number: 03004294.9
(22) Date of filing: 27.02.2003
(51) Int. Cl.: H04L 12/24, H04L 12/26, H04L 12/56

(54) **Packet communications system and transfer device**

(30) Priority: 28.02.2002 JP 2002055001
(71) Applicant: NTT DoCoMo, Inc., Tokyo 100-6150 (JP)
(72) Inventor: Okagawa, Takatoshi, NTT DoCoMo, Inc. Int.Prop.Dpt., Chiyoda-ku, Tokyo (JP); Ihara, Takeshi, NTT DoCoMo, Inc. Int.Prop.Dpt., Chiyoda-ku, Tokyo (JP); Yabusaki, Masami, NTT DoCoMo, Inc. Int.Prop.Dpt., Chiyoda-ku, Tokyo (JP)
(74) Representative: HOFFMANN - EITLE

(57) **Abstract**

The present invention provides a packet communications system and a transfer device which allow a network control function to be changed at low cost flexibly. The network manager comprises an instructor for transmitting instruction information to the plurality of transfer devices, the instruction information indicating a packet ID (terminal ID) and a control function (function ID) executed on the packet. The transfer device (50) comprises an executer (57) for executing a predetermined control function on the packet, a first memory (53) for storing the packet ID associated with the executer of the control function (57) executed on the packet, a manager (52) for updating the first memory in accordance with the instruction information received from the network manager, and an internal transfer (56) for transferring the received packet to the executer (57) associated with the packet in the first memory (53).

## Description

### CROSS REFERENCE TO RELATED APPLICATION

This application is based upon and claims the benefit of priority from the prior Japanese Patent Application No. P2002-055001, filed on February 28, 2002; the entire contents of which are incorporated herein by reference.

### BACKGROUND OF THE INVENTION

### 1. Field of the Invention

The present invention relates to a packet communications system and a transfer device for use therein.

### 2. Description of the Related Art

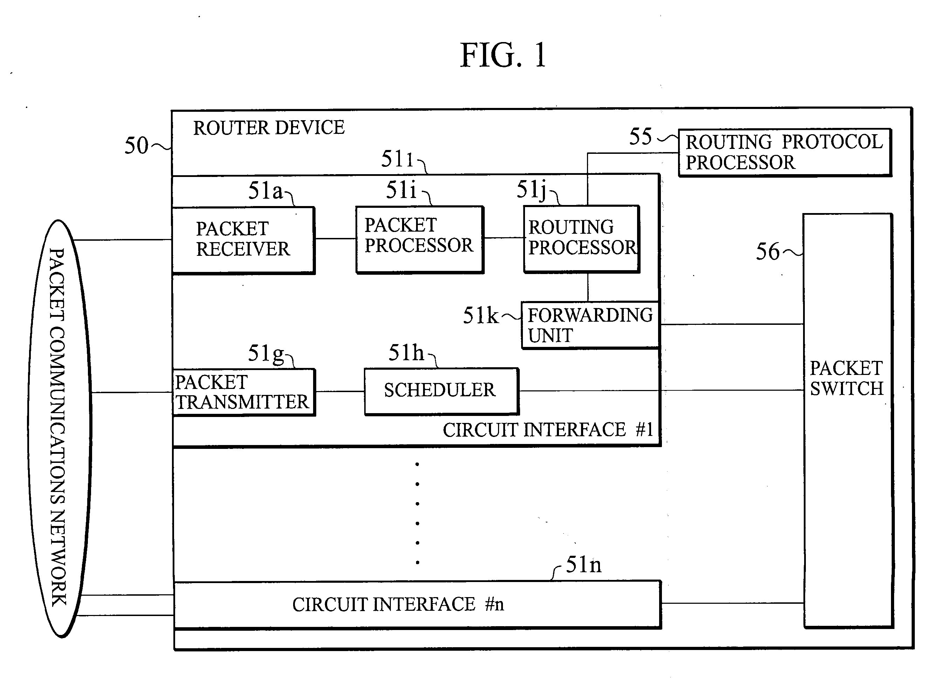

Referring to Fig. 1, the conventional packet communications system and the router device (transfer device) for use therein will be described.

The conventional router device 50 is a transfer device for routing and forwarding packets such as IP packets in the Internet. As shown in FIG. 1, the router device 50 is configured with circuit interfaces 51₁ to 51ₙ, a routing protocol processor 55, and a packet switch 56.

The conventional router device 50 is equipped with a routing processor (routing engine) 51ⱼ and a forwarding unit (forwarding engine) 51ₖ, which transact with hardware, in each circuit interface 51₁ to 51ₙ, so that high-speed packet transfer without decrease in throughput transferring IP packets is achieved as Internet traffic increases.

Recently, various kinds of traffic including real-time traffic such as voice, non-real-time traffic such as e-mail, and signaling traffic such as call-controlling signals and location-registering signals are transferred over IP packets. Each traffic has a different requirement for communication quality.

Therefore the router device 50 is equipped with new functions such as a marking function (packet processor 51ᵢ), queueing function, and scheduling function (scheduler 51ₕ). The marking function is configured to add a priority flag to an IP packet for priority processing on a packet basis. The queueing function is configured to queue IP packets based on a priority class. The scheduling function is configured to read IP packets based on a priority class.

In recent years, it is assumed that the router device 50 is required for sophisticated processing of IP packets, so as to achieve various kinds of packet communications services such as a first filtering function, a second filtering function, an address-converting function, a first buffering function, a second buffering function, a counting function, capsuling function, a copy function, and a multiplexing function.

The first filtering function is configured to discard selected IP packets according to a destination IP address, a source IP address, or a type/content of the higher level application, as a security service in an IP packet communications network.

The second filtering function is configured to perform congestion control by discarding selected IP packets according to traffic in an IP packet communications network.

The address-converting function is configured to change a destination IP address so as to change the routing destination as the destination terminal moves.

The first buffer function is configured to buffer IP packets temporarily as the destination terminal moves, so as to reduce the IP packet loss of the hand-over phase.

The second buffer function is configured to buffer IP packets temporarily as the destination terminal moves, so as to perform a shaping processing to a burst of traffic.

The counting function is configured to count the amount of information in one packet so as to measure traffic.

The capsuling function is configured to transfer an inputted packet over a different packet, that is, perform a tunneling processing, which is used in MPLS (Multi-protocol Label Switching) or Mobile IP, etc.

The copy function is used in the multicast communication. The multiplexing function is configured to multiplex and select a plurality of IP packets.

However, as described above, the conventional router device 50 is equipped with the required functions (including functions which may be required in the future) in the circuit interfaces 51₁ to 51ₙ, and executes the functions at a speed which is similar to the input interface speed, so as to achieve high throughput.

The conventional router device 50 has a problem in that the implementation and the internal processing in the router device 50 have become sophisticated and the cost of manufacturing of the router device 50 rises, as the kinds of functions implemented in the circuit interfaces 51₁ to 51ₙ increase.

The conventional router device 50 has a problem in that it is difficult to add new functions and to make connections among the functions, when each function is implemented into circuit interfaces 51₁ to 51ₙ as hardware.

The conventional packet communications network has a problem in that the required dedicated signaling protocol has to be implemented in the router device 50 when a new function is added or a new network control is performed, because an independent protocol such as signaling protocol is implemented to each function so as to execute a plurality of functions as described above. The conventional packet communications network has a problem in that a lot of processors for processing the signaling protocol have to be implemented in the router device 50, so that the cost of performing the signaling processing rises.

For example, in the "Mobile IP", the router device 50 has to be equipped with a dedicated protocol stack as an agent representing a home agent, to perform the signaling processing in the Mobile IP.

Further, the conventional router device 50 has a problem in that a network control function has to be restructured in the entire packet communications network, when each router device 50 comprises various network control functions depending on the packet communications network and the technique used in the packet communications (transports) changes.

### BRIEF SUMMARY OF THE INVENTION

In viewing of the foregoing, it is an object of the present invention to provide a packet communications system and a transfer device, which comprise an intelligent control mechanism as a packet communications network, allow packet communications (transports) performed by router devices (transfer devices) to perform various packet processing simply and quickly, and allow a network control function to be changed at low cost flexibly.

A first aspect of the present invention is summarized as a packet communications system comprising a network manager and a plurality of transfer devices . The network manager comprises an instructor configured to transmit instruction information to the plurality of transfer devices. The instruction information indicates a packet ID identifying a packet, and a control function executed on the packet. The transfer device comprises an executer configured to execute a predetermined control function on the packet, a first memory configured to store the packet ID associated with the executer of the control function executed on the packet, a manager configured to update the first memory in accordance with the instruction information received from the network manager, and an internal transfer configured to transfer the received packet to the executer associated with the packet in the first memory.

In the first aspect of the present invention, preferably, the first memory stores the packet ID associated with the executer and a parameter required to execute the control function, the executer comprises a second memory configured to store the packet ID associated with the parameter, the executer executes the control function on the received packet using the parameter associated with the packet in the second memory, and the manager transmits information for updating the second memory in accordance with the instruction information received from the network manager.

In the first aspect of the present invention, preferably, the transfer device comprises an interface configured to transmit and receive the packet via a packet communications network, the interface comprises a third memory configured to store the packet ID identifying the packet received at the interface associated with the executer of the control function executed on the packet, the manager transmits information for updating the third memory in accordance with the instruction information received from the network manager, and the internal transfer transfers the received packet to the executer associated with the packet in the third memory.

In the first aspect of the present invention, preferably, the third memory stores the packet ID associated with the executer and a routing ID, the interface comprises a routing ID adder configured to add the routing ID associated with the packet in the third memory to the received packet, and the internal transfer transfers the packet to the executer in accordance with the routing ID.

In the first aspect of the present invention, preferably, the executer comprises a router configured to route the packet to a predetermined interface after executing the control function on the packet.

In the first aspect of the present invention, preferably, the packet ID is address information included in the packet.

A second aspect of the present invention is summarized as a transfer device used in a packet communications system. The transfer device comprises an instruction information receiver configured to receive, from a network manager, instruction information indicating a packet ID identifying a packet and a control function executed on the packet, an executer configured to execute a predetermined control function on the packet, a first memory configured to store the packet ID associated with the executer of the control function executed on the packet, a manager configured to update the first memory in accordance with the instruction information received from the network manager, and an internal transfer configured to transfer the received packet to the executer associated with the packet in the first memory.

In the second aspect of the present invention, preferably, the first memory stores the packet ID associated with the executer and a parameter required to execute the control function, the executer comprises a second memory configured to store the packet ID associated with the parameter, the executer executes the control function on the received packet using the parameter associated with the packet in the second memory, and the manager transmits information for updating the second memory in accordance with the instruction information received from the network manager.

In the second aspect of the present invention, preferably, the transfer device comprises an interface configured to transmit and receive the packet via a packet communications network, the interface comprises a third memory configured to store the packet ID identifying the packet received at the interface associated with the executer of the control function executed on the packet, the manager transmits information for updating the third memory in accordance with the instruction information received from the network manager, and the internal transfer transfers the received packet to the executer associated with the packet in the third memory.

In the second aspect of the present invention, preferably, the third memory stores the packet ID associated with the executer and a routing ID, the interface comprises a routing ID adder configured to add the routing ID associated with the packet in the third memory to the received packet, and the internal transfer transfers the packet to the executer in accordance with the routing ID.

In the second aspect of the present invention, preferably, the executer comprises a router configured to route the packet to a predetermined interface after executing the control function on the packet.

In the second aspect of the present invention, preferably, the packet ID is address information included in the packet.

### BRIEF DESCRIPTION OF THE SEVERAL VIEWS OF THE DRAWINGS

FIG. 1 is a functional block diagram of the conventional router device.
FIG. 2 is a diagram illustrating the entire configuration of a packet communications system according to an embodiment of the present invention.
FIG. 3 is a functional block diagram of the router device according to the embodiment of the present invention.
FIG. 4 is a functional block diagram of the circuit interface in the router device according to the embodiment of the present invention.
FIG. 5 is an example of the function-mapping table (function-mapping cache table) in the router device according to the embodiment of the present invention.
FIG. 6 is a functional block diagram of the function unit in the router device according to the embodiment of the present invention.
Fig. 7 is a flowchart illustrating an operation of the circuit interface in the router according to the embodiment of the present invention when receiving the packets.
Fig. 8 is a flowchart illustrating an operation of the packet switch in the router according to the embodiment of the present invention.
Fig. 9 is a flowchart illustrating an operation of the function unit in the router according to the embodiment of the present invention.
Fig. 10 is a flowchart illustrating an operation of the packet communications system according to the embodiment of the present invention when updating the function-mapping table.

### DETAILED DESCRIPTION OF THE INVENTION

### (Configuration of a packet communications system according to an embodiment of the present invention)

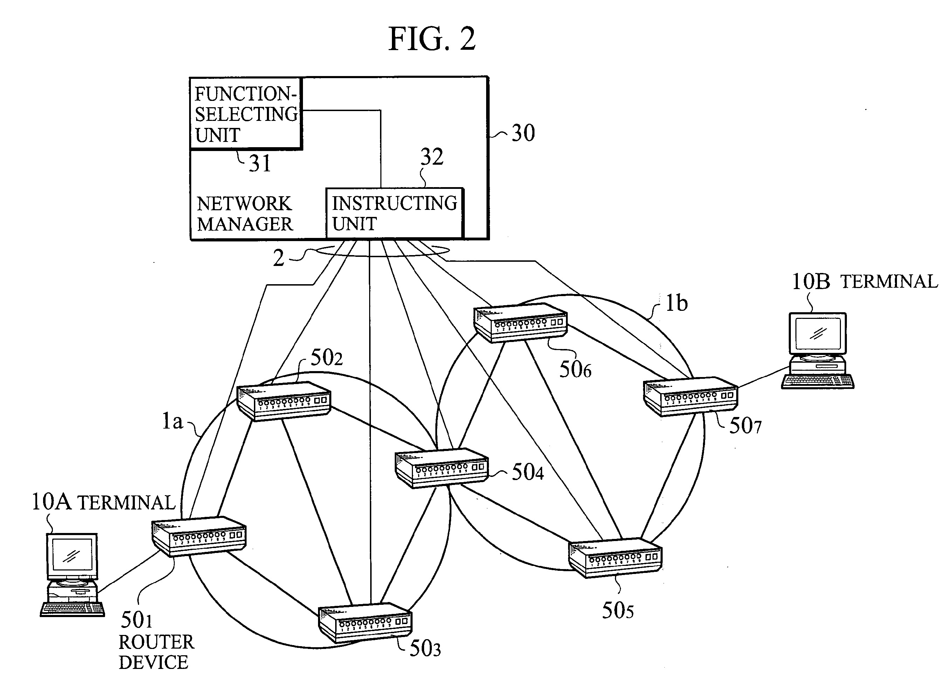

Referring to FIGs. 2 to 6, a configuration of a packet communications system according to an embodiment of the present invention will be described in detail below. FIG. 2 illustrates the entire configuration of the packet communications system according to the embodiment.

As shown in FIG. 2, a packet communications system according to the embodiment is configured with terminals 10A and 10B, a network manager 30, and router devices 50₁ to 50₇.

The terminals 10A and 10B, each of which is connected to the router devices 50₁ to 50₇, have packet communications functions. The terminals 10A and 10B may connect to the router devices 50₁ to 50₇ via wiring circuits or wireless circuits.

The network manager 30 performs network control functions in the packet communications networks 1ₐ and 1_{b} such as a QOS (Quality of Service) control function, a security control function, a mobility control function which manages location information and routing information as a terminal moves, a filtering function, an account function, or a monitoring function.

As shown in FIG. 2, the network manager 30 is configured with a function-selecting unit 31 and an instructing unit 32. The network manager 30 is connected via a common interface 2 to a plurality of router devices 50₁ to 50₇ in the packet communications networks 1ₐ and 1_{b} with a common protocol.

The function-selecting unit 31 selects which packet should be controlled with each control function or which control function should be executed on each packet in accordance with network control in the network manager 30.

The instructing unit 32 is an instructor configured to transmit instruction information to the plurality of router devices 50₁ to 50₇ (transfer devices). The instruction information indicates a packet ID identifying a packet and a control function executed on the packet via a common interface 2 with an interaction protocol.

The instructing unit 32 may transmit the instruction information to the plurality of router devices 50₁ to 50₇ via a dedicated interface (control signal network 2) set between the instructing unit 32 and the router devices 50₁ to 50₇. The instructing unit 32 may transmit the instruction information in the form of a packet to the plurality of router devices 50₁ to 50₇ via the packet communications network 1ₐ and 1_{b}.

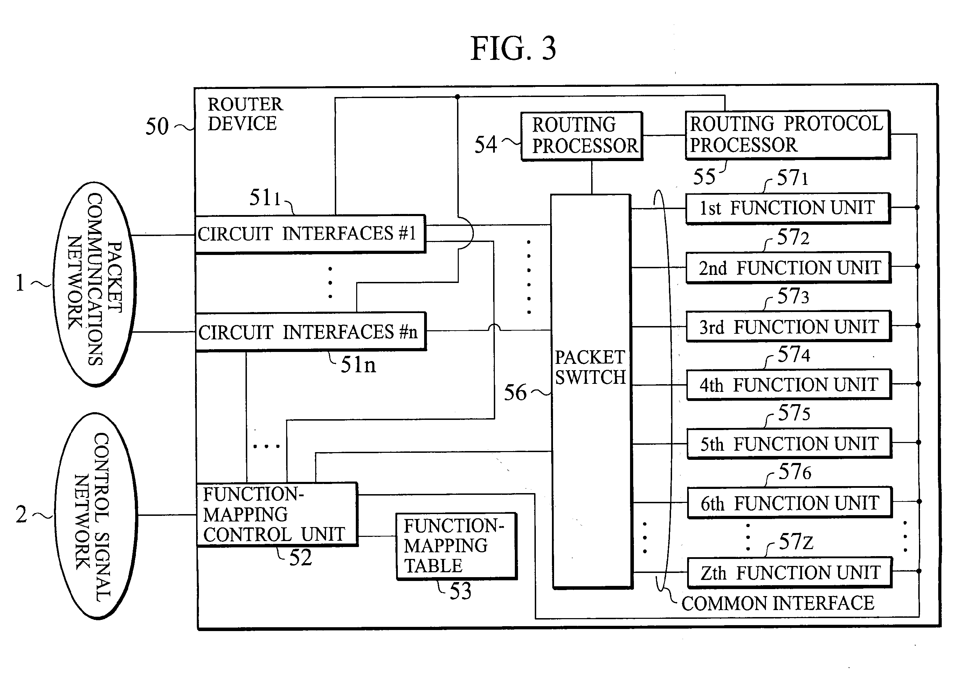

FIG. 3 illustrates a functional block diagram of the router device 50 used in the packet communications system according to the embodiment.

As shown in FIG. 3, the router device 50 is configured with a plurality of circuit interfaces 51₁ to 51ₙ. a function-mapping control unit 52, a function-mapping table 53, a routing processor 54, a routing protocol processor 55, a packet switch 56, and a plurality of function units 57₁ to 57_{z}.

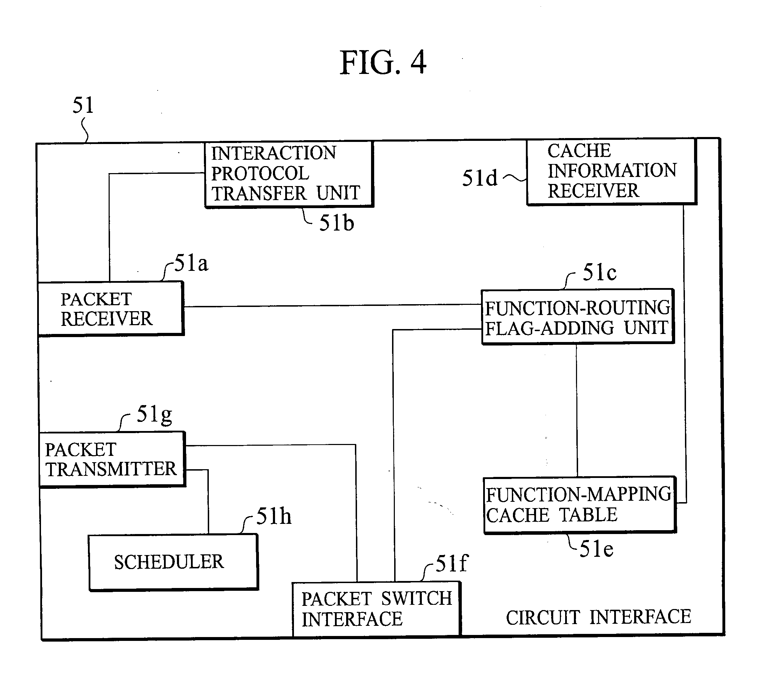

The circuit interface 51 is connected to the packet communications network 1, the function-mapping control unit 52, the routing protocol processor 55, and the packet switch 56. The circuit interface 51 is an interface configured to transmit and receive packets via the packet communications network 1. FIG. 4 illustrates a functional block diagram of the circuit interface 51.

As shown in FIG. 4, the circuit interface 51 is configured with a packet receiver 51ₐ. an interaction protocol transfer unit 51_{b}, a function-routing flag-adding unit 51_{c}, a cache information receiver 51_{d}, a function-mapping cache table 51ₑ. a packet switch interface 51_{f}, a packet transmitter 51_{g}, and a scheduler 51ₕ.

The packet receiver 51ₐ, which is connected to the interaction protocol transfer unit 51_{b} and the function-routing flag-adding unit 51_{c}, receives packets via the packet communications network 1.

The packet receiver 51ₐ judges whether or not the received packet is the instruction information instructing it to update the function-mapping table 53. If yes, the packet receiver 51ₐ transfers the packet to the interaction protocol transfer unit 51_{b}. The packet receiver 51ₐ transfers the packet to the function-routing flag-adding unit 51_{c} otherwise.

The interaction protocol transfer unit 51_{b}, which is connected to the packet receiver 51ₐ and the function-mapping control unit 52, transfers the packet (instruction information) from the packet receiver 51ₐ to the function-mapping control unit 52.

The function-routing flag-adding unit 51_{c} is connected to the packet receiver 51ₐ, the function-mapping cache table 51ₑ, and the packet switch interface 51_{f}. The function-routing flag-adding unit 51_{c} is a routing ID adder configured to add a routing ID (function-routing flag) associated with the packet in a third memory (the function-mapping cache table 51ₑ) to the received packet. The function-routing flag-adding unit 51_{c} transmits the packets including the routing ID to the packet switch interface 51_{f}.

The function-routing flag-adding unit 51_{c} adds to the received packet all the routing IDs in accordance with the order in which the control functions are executed, when the packet is associated with a plurality of routing IDs.

The cache information receiver 51_{d}, which is connected to the function-mapping cache table 51ₑ, receives information for updating the function-mapping cache table 51ₑ from the function-mapping control unit 52, and transfers the information to the function-mapping cache table 51ₑ.

The function-mapping cache table 51ₑ, which is connected to the function-routing flag-adding unit 51_{c} and the cache information receiver 51_{d}, is a third memory configured to store a packet ID (terminal ID) identifying the packet received at the circuit interface 51 associated with a function unit 57 (function ID) of the control function executed on the packet, a routing ID, and a parameter required to execute the control function (various information element).

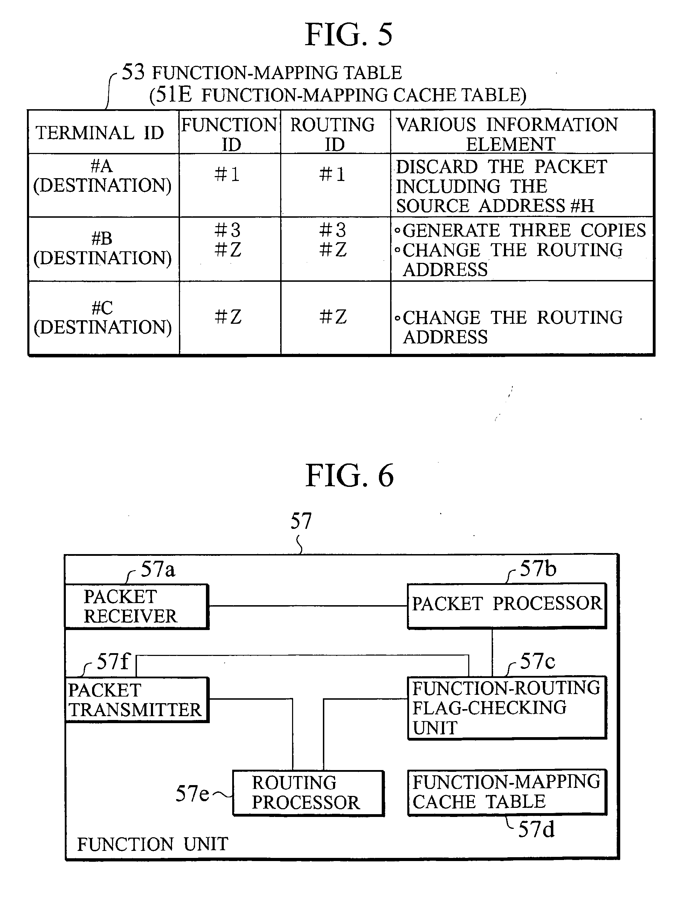

FIG. 5 illustrates an example of the function-mapping cache table 51ₑ. As shown in FIG. 5, the function-mapping cache table 51ₑ stores the terminal ID associated with the function ID, the routing ID and the various information elements.

The terminal ID is address information indicating a source address or a destination address included in the packet. The terminal ID may be information other than the address information such as information identifying a packet flow and information indicating an application included in the packet (TCP/UDP port number, etc.).

The function ID indicates a control function included in the instruction information from the network manager 30. The routing ID identifies a function unit 57₁ to 57_{z} which executes the control function. The function ID and the routing ID may be the same or different.

The various information element indicates a parameter required to execute the control function in the function unit 57₁ to 57_{z}.

The function-mapping cache table 51ₑ shown in FIG.5 defines that the packet switch interface 51_{f} should transfer the packet including the destination address "A" to the first function unit 57₁ which executes a filtering function (function ID = #1) and the first function unit 57₁ should execute the control function for discarding the packet including the source address "H".

The function-mapping cache table 51ₑ shown in FIG.5 defines that the packet switch interface 51_{f} should transfer the packet including the source address "B" to the, third function unit 57₃ which executes a copy function (function ID = #3), the third function unit 57₃ should execute the control function for generating three copies of the packet, the packet should be transferred to the Z^{th} function unit 57_{z} which executes a routing address-converting function (function ID = #z), and the z^{th} function unit 57_{z} should execute the control function for change the routing address of the packet.

The function-mapping cache table 51ₑ shown in FIG.5 defines that the packet switch interface 51_{f} should transfer the packet including the source address "B" to the z^{th} function unit 57_{z} which executes a routing address-converting function (function ID = #z), and the Z^{th} function unit 57_{z} should execute the control function for changing the routing address of the packet..

The function-mapping cache table 51ₑ can store only records regarding the packets received at the circuit interface 51, or store the records regarding all packets. The function-mapping cache table 51ₑ is the same as the function-mapping table 53 when storing the records regarding all packets.

The packet switch interface 51_{f}, which is connected to the function-routing flag-adding unit 51_{c} and the packet transmitter 51_{g}, transmits the packets from the function-routing flag-adding unit 51_{c} to the packet switch 56, and transmits the packets from the packet switch 56 to the packet transmitter 51_{g}.

The packet transmitter 51_{g}, which is connected to the packet switch interface 51_{f} and the scheduler 51ₕ, transmits the packets from the packet switch interface 51_{f} to the packet communications network 1 in accordance with the instruction from the scheduler 51ₕ.

The scheduler 51ₕ, which is connected to the packet transmitter 51_{g}. instructs the packet transmitter 51_{g} to read the packets in accordance with the priority class.

The function-mapping control unit 52 is connected to the plurality of circuit interfaces 51₁ to 51ₙ. the function-mapping table 53, and the plurality of function units 57₁ to 57_{z}. The function-mapping control unit 52 is a manager configured to update the function-mapping table 53 (first memory) in accordance with the instruction information received from the network manager 30.

The function-mapping control unit 52 transmits information for updating the function-mapping cache table 51ₑ to the circuit interfaces 51₁ to 51ₙ, transmits information for updating the function-mapping cache table 57_{d} to the function units 57₁ to 57_{Z}, when receiving the instruction information from the network manager 30.

The function-mapping control unit 52 can transmit the information regarding all records in the function-mapping cache table 51ₑ or 57_{d}, or transmit the information regarding the records added/changed in the function-mapping cache table 51ₑ or 57_{d}.

The function-mapping control unit 52 can transmit the information to the circuit interfaces 51₁ to 51ₙ and the function units 57₁ to 57_{z} directly or via the packet switch 56.

The function-mapping control unit 52 can transmit the information to the concerned circuit interfaces 51₁ to 51ₙ and the concerned function units 57₁ to 57_{z}, transmit the information to all the circuit interfaces 51₁ to 51ₙ and all the function units 57₁ to 57_{z}.

The function-mapping control unit 52 transmits an acknowledgement(ACK) for reporting the completion of the processing to the network manager 30 via the packet communications network 1 or the control signal network 2.

The function-mapping table 53, which is connected to the function-mapping control unit 52 and the packet switch 56, is a first memory configured to store a packet ID (terminal ID) associated with a function unit 57₁ to 57_{z} of the control function executed on the packet (function ID) and a parameter required to execute the control function (various information element). As shown in FIG.5, the configuration of the function-mapping table 53 is same as the configuration of the function-mapping cache table 51ₑ.

The routing processor 54, which is connected to the routing protocol processor 55 and the packet switch 56, is a router configured to route the packet to a predetermined circuit interface 51 via the packet switch 56 together with the routing protocol processor 55, after the function units 57₁ to 57_{z} execute the control function on the packet.

The routing protocol processor 55 is connected to the circuit interfaces 51₁ to 51ₙ, the routing processor 54, and the function units 57₁ to 57_{z}. The routing protocol processor 55 manage a routing table in conformance with the routing protocol such as OSPF (Open Shortest Path First) and RIP (Routing Information Protocol).

The packet switch 56 is connected to the circuit interfaces 51₁ to 51ₙ, the function-mapping control unit 52, the function-mapping table 53, the routing processor 54, and the function units 57₁ to 57_{z}. The packet switch 56 is an internal transfer configured to transfer the received packet to the function unit (executer) 57₁ to 57_{z} associated with the packet in the function-mapping table (first memory) 53.

The packet switch 56 can transfer the received packet to the function unit 57₁ to 57_{z} associated with the packet, by referring to the function-mapping cache table 51ₑ in the circuit interfaces 51₁ to 51ₙ.

The packet switch 56 can transfer the packet to the function unit 57₁ to 57_{z} in accordance with routing ID added to the packet.

The packet switch 56 transfers the packets routed by routing processor 54 or 57ₑ to the predetermined circuit interface 51₁ to 51ₙ.

Further, the packet switch 56 transfers, to the circuit interface 51₁ to 51ₙ or the function unit 57₁ to 57_{z}, information for updating the function-mapping cache table 51ₑ or 57_{d} transmitted from the function-mapping control unit 52.

The packet switch 56 is connected to the function units 57₁ to 57_{z} via a common interface.

The function unit 57₁ to 57_{z} is connected to the function-mapping control unit 52, the routing protocol processor 55, and the packet switch 56. The function unit 57₁ to 57_{z} is an executer configured to execute the predetermined control function on the packet.

The function units 57₁ to 57_{z} are general hardware devices, for example ASIC, which can execute the predetermined control function and are easy to replace. Each of the function unit 57₁ to 57_{z} may execute a different control function, or some of the function units 57₁ to 57_{z} may execute the same control function. The function units 57₁ to 57_{z} may be configured to execute control functions which will be developed in the future, in addition to a QoS control function, a security control function, and mobility control function, etc.

FIG. 6 illustrates a functional block diagram of the function unit 57. As shown in FIG. 6, the function unit 57 is configured with a packet receiver 57ₐ, a packet processor 57_{b}, a function-routing flag-checking unit 57_{c}, a function-mapping cache table 57_{d}. a routing processor 57ₑ, and a packet transmitter 57_{f}.

The packet receiver 57ₐ, which is connected to the packet processor 57_{b}, receives the packet transmitted from the packet switch 56, and transmits the received packet to the packet processor 57_{b}.

The packet processor 57_{b} is connected to the packet receiver 57ₐ, the function-routing flag-checking unit 57_{c}, and the function-mapping cache table 57_{d}. The packet processor 57_{b} executes the predetermined control function by referring to the function-mapping cache table 57_{d}. The packet processor 57_{b} transmits, to the function-routing flag-checking unit 57_{c}, the packet on which the predetermined control function is executed.

The function-routing flag-checking unit 57_{c} is connected to the packet processor 57_{b}, the routing processor 57ₑ, the packet transmitter 57_{f}. The function-routing flag-checking unit 57_{c} deletes the routing ID included in the packet transmitted from the packet processor 57_{b}. The function-routing flag-checking unit 57_{c} judges whether or not the packet includes other routing ID. If yes, the function-routing flag-checking unit 57_{c} transmits the packet to the packet transmitter 57_{f}. The function-routing flag-checking unit 57_{c} transmits the packet to the routing processor 57ₑ otherwise.

The function-mapping cache table 57_{d}, which is connected to the packet processor 57_{b}, is a second memory configured to store the packet ID (terminal ID) associated with the parameter (various information element).

The routing processor 57ₑ, which is connected to the function-routing flag-checking unit 57_{c} and the packet transmitter 57_{f}, is a router configured to route the packet transmitted from the function-routing flag-checking unit 57_{c}, to the predetermined circuit interface 51 via the packet switch 56, together with the routing protocol processor 55.

The packet transmitter 57_{f}, the function-routing flag-checking unit 57_{c} and the routing processor 57ₑ, transmits the packet transmitted from the function-routing flag-checking unit 57_{c} or the routing processor 57ₑ to the packet switch 56.

The network manager 30 and the router device 50 can be installed in a device together. In the embodiment, the router device 50 is used as a transfer device. However, the present invention is not limited to the above. Any devices which can transfer packets may be used as a transfer device.

### (Operation of the packet communications system according to the embodiment)

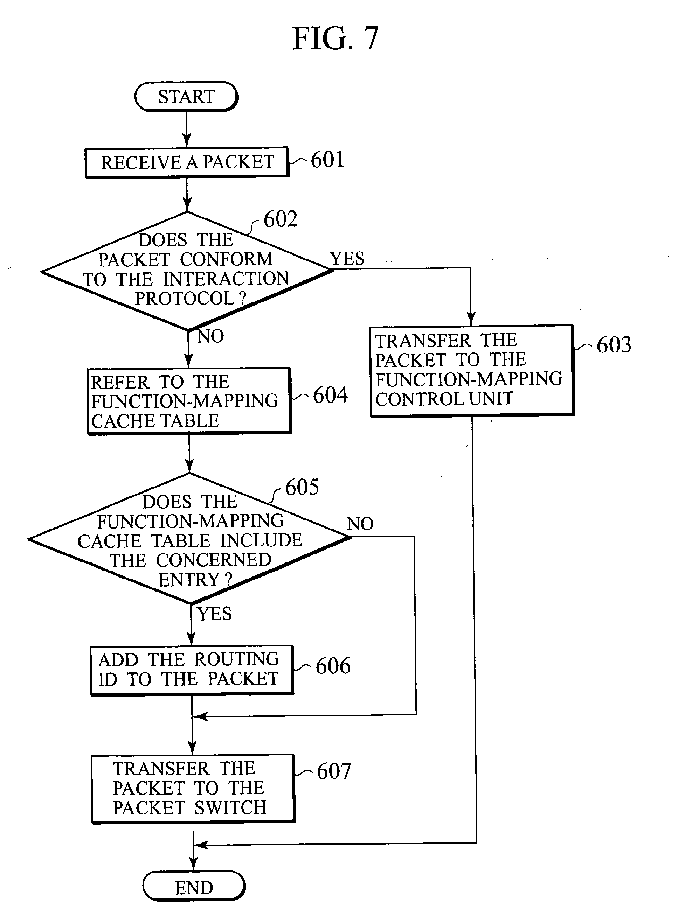

Next the operations of the packet communications system according to the embodiment will be described with reference to FIG. 7 to 9. FIG. 7 is a flowchart illustrating the operation of the circuit interface 51 in the router device 50 according to the embodiment when receiving the packet.

As shown in FIG. 7, in step 601, the packet receiver 51ₐ in the circuit interface 51 receives a packet transmitted via the packet communications network 1.

In step 602, the packet receiver 51ₐ judges whether or not the packet conforms to the interaction protocol, that is, the packet is instruction information. If yes, the operation proceeds to step 603. The operation proceeds to step 604 otherwise.

In step 603, the interaction protocol transfer unit 51_{b} the instruction information to the function-mapping control unit 52, so as to update the function-mapping table 53. Then, the operation finishes.

In step 604, the function-routing flag-adding unit 51_{c} refers to the function-mapping cache table 51ₑ. In step 605, the function-routing flag-adding unit 51_{c} judges whether or not the function-mapping cache table 51ₑ includes a record (entry) related to the received packet. If yes, the operation proceeds to step 606. The operation proceeds to step 607 otherwise.

In step 606, the function-routing flag-adding unit 51_{c} adds to the received packet the routing ID associated with the packet. In step 607, the packet switch interface 51_{f} transfers the packet transmitted from the function-routing flag-adding unit 51_{c} to the packet switch 56.

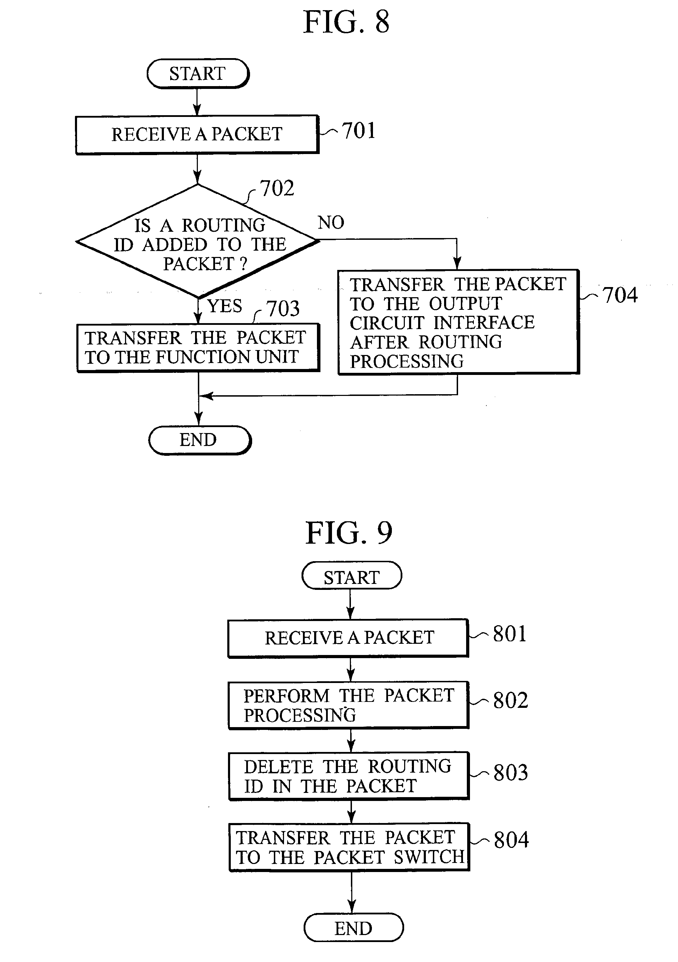

FIG. 8 is a flowchart illustrating the operation of the router device 50 according to the embodiment when switching the packet.

As shown in FIG. 8, in step 701, the packet switch 56 receives a packet from the circuit interface 51 or the function unit 57. In step 702, the packet switch 56 judges whether or not a routing ID is added to the received packet. If yes, the operation proceeds to step 703. The operation proceeds to step 704 otherwise.

In step 703, the packet switch 56 transfers the received packet to the concerned function unit 57₁ to 57_{z} using the routing ID.

In step 704, the packet switch 56 transfers the packet to the output circuit interface 51 in accordance with the result of the routing processing performed by the routing processor 54.

The packet switch 56 can transfer the packet to the function unit 57₁ to 57_{z} using the routing ID associated with the packet by referring to the function-mapping table 53, when the routing ID is not added to the packet received from the circuit interface 51 in step 702.

FIG. 9 is a flowchart illustrating the operation of the function unit in the router device 50 according to the embodiment.

As shown in FIG. 9, in step 801, the packet receiver 57ₐ in the function unit 57 receives a packet transmitted from the packet switch 56. In step 802, the packet processor 57_{b} executes the predetermined control function on the received packet by referring to the function-mapping cache table 57_{d}, and to be more specific, by referring to the packet ID (terminal ID) and the parameter (various information element) in the function-mapping cache table 57_{d}.

In step 803, the function-routing flag-checking unit 57_{c} deletes the routing ID (function-routing flag) in the packet received from the packet processor 57_{b}.

In step 804, the function-routing flag-checking unit 57_{c} checks whether or not the other routing ID is added to the packet.

If yes, the function-routing flag-checking unit 57_{c} transmits the packet to the packet transmitter 57_{f}, and the packet transmitter 57_{f} transmits the received packet to the packet switch 56.

Otherwise, the function-routing flag-checking unit 57_{c} transmits the packet to the routing processor 57ₑ, and the packet transmitter 57_{f} transmits the packet routed by the routing processor 57ₑ.

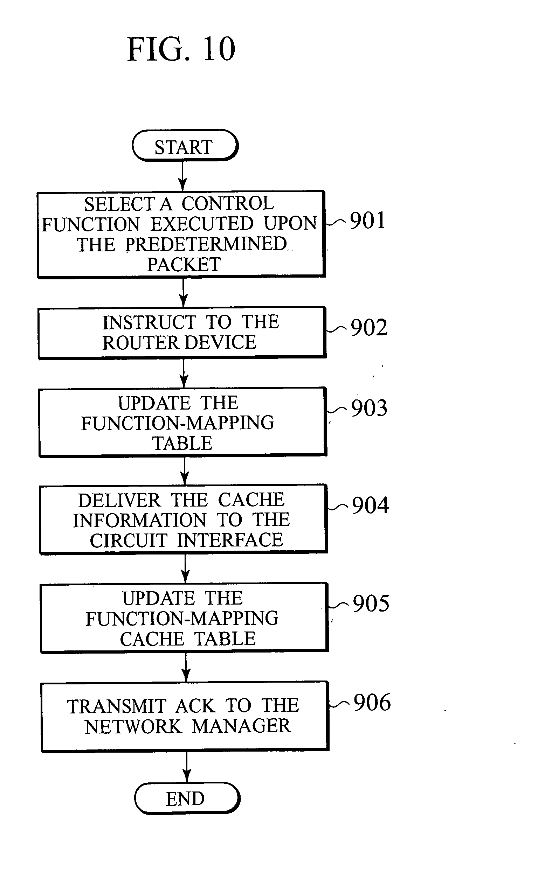

FIG. 10 is a flowchart illustrating the operation for updating the function-mapping table in the packet communications system according to the embodiment when switching the packet.

As shown in FIG. 10, in step 901, the function-selecting unit 31 in the network manager 30 selects a control function executed on the predetermined packet. In step 902, the instructing unit 32 in the network manager 30 transmits the instruction information as an interaction protocol to all router devices 50₁ to 50₇ or the predetermined router devices 50 via the packet communications network 1 or the control signal network 2, in accordance with the result of the selection by the function-selecting unit 31.

In step 903, the function-mapping control unit 52 in the router device 50 updates the function-mapping table 53 in accordance with the instruction information which is received via the control signal network 2, or via the packet communications network 1 and the circuit interface 51.

In step 904, the function-mapping unit 52 transmits information for updating the function-mapping cache table 51ₑ (cache information) to the circuit interfaces 51₁ to 51ₙ, and transmits information for updating the function-mapping cache table 57_{d} (cache information) to the function units 57₁ to 57_{z}.

In step 905, the function-mapping cache tables 51ₑ in the circuit interfaces 51 are updated in accordance with the information, and the function-mapping cache tables 57_{d} in the function units 57 are also updated in accordance with the information.

In step 906, the acknowledgement (ACK) is transmitted from the function-mapping control unit 52 to the network manager 30 via the packet communications network 1 or the control signal network 2.

### (The functions and effects of the packet communications system according to the embodiment)

According to the packet communications system of this embodiment, the packet switch 56 (internal transfer) in the router device 50 (transfer device) can transfer the received packet to the function unit 57 (executer) associated with the packet in the function-mapping table 53 (first memory), and the function unit 57 (executer) can execute the predetermined control function on the packet, thus enabling various packet processing for various kinds of network control with combinations of the control functions executed by the plurality of function units 57.

According to the packet communications system of this embodiment, the function units 57 which are hardware devices executing general functions allow the internal configuration in the router devices 50 (transfer device) to be general, allow higher flexibility for adding/changing/deleting the network control functions, and allow high-speed IP packet processing and IP packet transfer at a low cost.

Then, the hardware devices executing the general functions required in the router devices 50 (transfer device) can be installed as plug-and-play devices into the router devices 50 (transfer device) via the common interface in the router devices 50 (transfer device), thus making it possible for the network operator such as the telecommunication company and the ISP (Internet Service Provider) to select only the required network control functions easily.

According to the packet communications system of this embodiment, the function-mapping control unit 52 (manager) can update the function-mapping table 53 (first memory) in accordance with the instruction information received from the network manager 30 , and the packet switch 56 (internal transfer) can transfer the received packet to the function unit 57 (executer) associated with the packet in the function-mapping table 53 (first memory), thus enabling the construction of the packet communications network 1 independently of the various network controls. More specifically, various kinds of network control can be achieved in the network, other than an IP network such as the Internet at present without a change of the network manager.

According to the packet communications system of this embodiment, the function-mapping cache table 57_{d} (second memory) can store the terminal ID (packet ID) associated with the various information element (parameter), and the function unit 57 (executer) can execute the control function using the various information element (parameter), thus making it possible for the function unit 57 (executer) to execute the control function which requires the parameter.

According to the packet communications system of this embodiment, the circuit interface 51 (interface) can comprise the function-mapping cache table 51ₑ (third memory), and the packet switch 56 (internal transfer) can transfer the received packet to the function unit 57 (executer) associated with the packet in the function-mapping cache table 51ₑ (third memory), thus enabling high-speed processing in the router device 50 (transfer device).

As described above, according to the present invention, the packet communications system and router device which are configured with an intelligent control mechanism as a packet communications network, allow packet communications (transports) performed by router devices (transfer devices) to perform various packet processing simply and quickly, and allow a network control function to be changed at low cost flexibly.

Additional advantages and modifications will readily occur to those skilled in the art. Therefore, the invention in its broader aspects is not limited to the specific details and the representative embodiment shown and described herein. Accordingly, various modifications may be made without departing from the spirit or scope of the general inventive concept as defined by the appended claims and their equivalents .

## Claims

1. A packet communications system comprising a network manager and a plurality of transfer devices, wherein
the network manager comprises;
an instructor configured to transmit instruction information to the plurality of transfer devices, the instruction information indicating a packet ID identifying a packet and a control function executed on the packet and
the transfer device comprises;
an executer configured to execute a predetermined control function on the packet,
a first memory configured to store the packet ID associated with the executer of the control function executed on the packet,
a manager configured to update the first memory in accordance with the instruction information received from the network manager, and
an internal transfer configured to transfer the received packet to the executer associated with the packet in the first memory.

2. The packet communications system according to claim 1, wherein
the first memory stores the packet ID associated with the executer and a parameter required to execute the control function,
the executer comprises a second memory configured to store the packet ID associated with the parameter,
the executer executes the control function on the received packet using the parameter associated with the packet in the second memory, and
the manager transmits information for updating the second memory in accordance with the instruction information received from the network manager.

3. The packet communications system according to claim 1, wherein
the transfer device comprises an interface configured to transmit and receive the packet via a packet communications network,
the interface comprises a third memory configured to store the packet ID identifying the packet received at the interface associated with the executer of the control function executed on the packet,
the manager transmits information for updating the third memory in accordance with the instruction information received from the network manager, and
the internal transfer transfers the received packet to the executer associated with the packet in the third memory.

4. The packet communications system according to claim 3, wherein
the third memory stores the packet ID associated with the executer and a routing ID,
the interface comprises a routing ID adder configured to add the routing ID associated with the packet in the third memory to the received packet, and
the internal transfer transfers the packet to the executer in accordance with the routing ID.

5. The packet communications system according to claim 3, wherein the executer comprises a router configured to route the packet to a predetermined interface after executing the control function on the packet.

6. The packet communications system according to claim 1, wherein the packet ID is address information included in the packet.

7. A transfer device used in a packet communications system, the transfer device comprising:
an instruction information receiver configured to receive, from a network manager, instruction information indicating a packet ID identifying a packet and a control function executed on the packet,
an executer configured to execute a predetermined control function on the packet,
a first memory configured to store the packet ID associated with the executer of the control function executed on the packet,
a manager configured to update the first memory in accordance with the instruction information received from the network manager, and
an internal transfer configured to transfer the received packet to the executer associated with the packet in the first memory.

8. The transfer device according to claim 7, wherein
the first memory stores the packet ID associated with the executer and a parameter required to execute the control function,
the executer comprises a second memory configured to store the packet ID associated with the parameter,
the executer executes the control function on the received packet using the parameter associated with the packet in the second memory, and
the manager transmits information for updating the second memory in accordance with the instruction information received from the network manager.

9. The transfer device according to claim 7, the transfer device comprising;
an interface configured to transmit and receive the packet via a packet communications network, and wherein
the interface comprises a third memory configured to store the packet ID identifying the packet received at the interface associated with the executer of the control function executed on the packet,
the manager transmits information for updating the third memory in accordance with the instruction information received from the network manager, and
the internal transfer transfers the received packet to the executer associated with the packet in the third memory.

10. The transfer device according to claim 9, wherein
the third memory stores the packet ID associated with the executer and a routing ID,
the interface comprises a routing ID adder configured to add the routing ID associated with the packet in the third memory to the received packet, and
the internal transfer transfers the packet to the executer in accordance with the routing ID.

11. The transfer device according to claim 9, wherein the executer comprises a router configured to route the packet to a predetermined interface after executing the control function on the packet.

12. The transfer device according to claim 7, wherein the packet ID is address information included in the packet.
